# EUROPEAN PATENT APPLICATION

(11) **EP 1 243 484 A1**
(43) Date of publication of application: **25.09.2002**
(21) Application number: 00985952.1
(22) Date of filing: 27.12.2000
(51) Int. Cl.: B60R 21/26

(54) **GAS GENERATOR FOR AIR BAG AND AIR BAG DEVICE**

(30) Priority: 27.12.1999 JP 37006199
(71) Applicant: Daicel Chemical Industries, Ltd., Sakai-shi, Osaka 590-8501 (JP)
(72) Inventor: NAKASHIMA, Yoshihiro, Himeji-shi, Hyogo 671-1153 (JP); YAMAZAKI, Masayuki, Himeji-shi, Hyogo 671-1262 (JP)
(74) Representative: Grünecker, Kinkeldey, Stockmair & Schwanhäusser Anwaltssozietät
(86) International application number: JP0009325
(87) International publication number: WO01047753

(57) **Abstract**

The present invention provides a gas generator for an air bag which has a simple structure and is capable of inflating an air bag at an optimal timing and at an optimal developing speed from the time when a gas generator starts actuating.

There is provided a gas generator for an air bag in which a gas generating means is stored in a combustion chamber defined in a housing, an orifice member having a plurality of nozzles which are narrowed according to combustion of the gas generating means is provided in a flow path for an activation gas extending from the combustion chamber to a gas discharge port, and a proper combustion pressure is maintained by the orifice member.

## Description

### Technical Field of the Invention

The present invention relates to a gas generator for an air bag for protecting a vehicle occupant from the impact, particularly, to a gas generator for an air bag characterized in its operation performance, and an air bag apparatus using the gas generator.

### Related Art

In a vehicle such as an automobile, in order to prevent the passenger from crashing into a hard portion inside the vehicle such as a steering wheel and a windshield due to an inertia and being injured or died when the vehicle collides at a high speed, an air bag system, which inflates an air bag rapidly with a gas to protect a passenger from colliding against a dangerous portion of the vehicle, is provided.

It is demanded that such an air bag system can safely restrain the passenger even when the frame of the occupant (for example, whether a sitting height is long or short, whether an adult or a child, and the like), a sitting attitude (for example, an attitude of holding on the steering wheel) and the like are different. Then, there has been conventionally suggested an air bag system which is actuated, applying the impact to the passenger as small as possible at the initial stage of the actuation.

JP-A 8-207696 suggests using two kinds of gas generating agent capsules for generating a gas at two stages comprising a first stage in which an air bag is inflated relatively slowly and a second stage in which a gas is generated rapidly. However, in this art, there is a drawback such that the structure of the interior of the gas generator is complicated and the size of a container is made large, which results in a factor of increasing the cost.

Also in US-A 4,998,751 and US-A 4,950,458, it is proposed that two combustion chambers are provided for restricting the actuation function of the gas generator and the gas generating agent is burnt at two stages. The structure is, however, complicated and it is not satisfactory.

### Disclosure of the Invention

The present invention provides a gas generator for an air bag which has a simple structure and can inflate an air bag at an optimal timing from a start of actuation of a gas generator and at an optimal developing speed.

The above object of the present invention can be achieved by a gas generator for an air bag comprising, in a housing having a gas discharge port, an ignition means which actuates a gas generator and a gas generating means which generates an activation gas for inflating an air bag due to the actuation of the ignition means, wherein the gas generating means is accommodated in a combustion chamber, an orifice member provided with a plurality of nozzles which are narrowed according to combustion of the gas generating means is provided in a flow path for the activation gas extending from the combustion chamber to the gas discharge port, and a proper combustion pressure is maintained by the orifice member.

For example, if a solid product such as a combustion residue generated by combustion of the gas generating means clogs in the nozzles of the orifice member provided in the flow path for the activation gas to narrow them, the combustion pressure can be maintained by the stepwise clogged nozzles. That is, the gas generating means burns to reduce its surface area, and thereby the combustion performance of the gas generating means is lowered. However, by arranging such an orifice member in the flow path of an activation gas, the combustion pressure can be maintained properly, so that compensation is made for lowering of the combustion performance of the gas generating means and the combustion performance of the gas generating means can be adjusted.

Whether or not the nozzles of the orifice member are narrowed according to the combustion of the gas generating means is judged on the basis of the change of the pressure loss of the orifice member. That is, the pressure loss (or ventilation resistance) of the orifice member before the gas generating means burns (before an activation gas is generated) is measured and the pressure loss (or ventilation resistance) of the orifice member after the gas generator is actuated (after the activation gas is purified) is measured, and when the latter pressure loss (or ventilation resistance) is increased compared with the former, it can be judged that the nozzles of the orifice member are narrowed according to the combustion of the gas generating means. In the present invention, an orifice member constituted such that the pressure loss (ventilation resistance) of the orifice member after actuation of the gas generator is 300% or more of the pressure loss (ventilation resistance) of the orifice member before the actuation of the gas generator is preferably used.

If the orifice member is judged by the pressure loss in this manner, it is preferable that the orifice member of the present invention is adjusted such that its pressure loss is smaller than that of the gas discharge port before combustion of the gas generating means and is larger than that of the gas discharge port after the combustion of the gas generating means.

The orifice member which is narrowed by clogging the nozzles with a solid product generated according to combustion of the gas generating means is judged on the basis of a correlation between the pressure loss before combustion of the gas generating means and the amount of the solid product generated from the gas generating means. As the orifice member in the present invention, such one is preferably used that its pressure loss before and after actuation of the gas generator is increased 300% or more, more preferably, 500 to 1,500%, further preferably, 800 to 1,000% or so. Such an orifice member can be realized by, for example, a combination of an orifice member having the pressure loss of 0.4 to 0.8 kPa under the atmosphere of 20°C at a flow rate of air of 350 liters/minute and the gas generating means which generates a solid product of 15g per 100g of the gas generating means, preferably, a solid product of 30g.

As the above-described orifice member, for example, a filter means can be used. In this case, openings of the filter means serve as the nozzles. Such a filter means is disposed inside the housing in order to remove the solid product generated by combustion of the gas generating means. As such a filter means, a filter which is used for purifying an activation gas generated by combustion of the gas generating means, a coolant which is used for removing the solid product contained in an activation gas, and a coolant/filter which has both the functions can be used. Also, as such a filter means, one which is formed by winding a metal wire mesh in a laminating manner or one which is formed by winding an expanded metal in a multi-layer can be used.

When the filter means is used as the orifice member, the term "pressure loss" means a pressure loss in the radial direction of the filter means. The pressure loss of the filter means and the pressure loss of the gas discharge port can be obtained by a difference between the pressure in an gas-inflow side and the pressure in gas-outflow side. If the openings of the filter means correspond to the nozzles in the orifice member, whether or not the openings in the filter means are narrowed according to combustion of the gas generating means can be regarded as change of the pressure loss of the filter means itself. That is, the pressure loss of the filter means before the gas generating means burns (before generation of the activation gas) is measured, the pressure loss of the filter means after actuation of the gas generator (after purifying of an activation gas) is then measured, and when the pressure loss of the latter has been increased, it can be determined that the openings of the filter means are narrowed according to combustion of the gas generating means. In the present invention, a filter means structured such that the pressure loss of the filter means after actuation of the gas generator reaches 300% or more of the pressure loss of the filter means before actuation of the gas generator is preferably used.

As the gas generating means, a conventional gas generating means which generates an activation gas for inflating an air bag by combustion can be used. As such a gas generating means, a conventionally and widely used azide type gas generating means based on an inorganic azide such as a sodium azide or the like, or so-called non-azide type gas generating means which is not based on the inorganic azide may be used. When the orifice member is which the nozzles are narrowed by the solid product generated by combustion of the gas generating means is used, a gas generating means generating a solid product in a proper amount is preferably used. Such a gas generating means can include, for example, a tetrazole compound such as 5-amino tetrazole or the like, guanidine derivatives such as nitroguanidine, metal nitrate such as strontium nitrate or the like, and material including natural clay, talc, clay, silica or binder, if required. Further in the present invention, as the gas generating means, one whose surface area is remarkably reduced by combustion, for example, a gas generating means formed in a tablet shape, can be used. This is because, even if the surface area of the gas generating means becomes small according to combustion thereof, the internal pressure of the housing is sufficiently adjusted so that a sufficient amount of gas discharge can be secured without reduction of the combustion performance, as described above.

The ignition means is disposed inside the housing to actuate the gas generator for an air bag by igniting and burning the gas generating means, and a known electric ignition type igniter or mechanical ignition type igniter, or one obtained by combining these igniters and a transfer charge can be used as the ignition means.

Also, the present invention provides a gas generator for an air bag comprising, in a housing having a gas discharge port, an ignition means to actuate a gas generator and a gas generating means which generates an activation gas for inflating an air bag due to actuation of the ignition means, wherein the operation performance of the gas generator is adjusted such that a tank internal pressure in a tank combustion test is 50 kPa or less at 15 milliseconds after an igniting current is applied, 140 to 200 kPa at 40 milliseconds after the igniting current is applied, and the peak of the internal pressure of the tank appears at 60 to 100 milliseconds after the igniting current is applied, and that the tank internal pressure at that time (peak time) becomes 230 kPa or less.

In the gas generator, by setting the tank internal pressure at 15 milliseconds after an igniting current is applied to 50 kPa or less, a safe activation can be achieved even at the initial stage of actuation of the gas generator, and by setting the tank internal pressure at 40 milliseconds after the igniting current is applied to 40 to 200 kPa, a sufficient restraining force can be obtained. Further, if such an adjustment is made that the peak of the tank internal pressure appears at 60 to 100 milliseconds after the igniting current is applied and that the tank internal pressure at that time (peak time) becomes 230 kPa or less, a passenger can be supported with a proper force while maintaining a restraining force of the air bag. If the pressure is too strong at the peak time, the occupant once restrained may be pushed aside, and a satisfactory operation performance can not be expected.

In the gas generator of the present invention showing such an operation performance, since the gas discharge amount is maintained after activation, particularly in the latter half of combustion of the gas generating means, an air bag (bag body) accommodated in a module can be developed without imparting an excessive impact to a vehicle occupant while maintaining an inflating speed of the initial stage.

The tank combustion test in the present invention is a test conducted in a method described below. The tank internal pressure is a pressure inside a tank made of SUS in the tank combustion test. A value of the tank internal pressure ordinarily varies according to time elapse.

### <Tank combustion test>

A gas generator for an air bag is fixed inside a tank made of SUS (stainless steel) and having an internal volume of 60 liters, and it is connected to an external igniting electric circuit after the tank is sealed at the room temperature. A time when a switch of the igniting electric circuit is turned on (when igniting current is applied) is set to 0 and a pressure increase change in the tank is measured for 0 to 200 milliseconds by a pressure transducer separately provided to the tank. A curve (hereinafter, referred to as "tank curve") for evaluating the performance of the gas generator can be finally obtained as a tank pressure/time curve by performing computer processing on respective measurement data. A portion of the gas in the tank is taken out after completion of the combustion and it can be provided for a gas analysis of such a gas as CO, NOx.

Also, the combustion pressure in the present invention means a pressure in the housing obtained by combustion of the gas generating means at the tank combustion test, and, naturally, the value thereof varies according to time elapse. The peak of the combustion maximum internal pressure in the housing means the time when the housing internal pressure becomes the maximum due to combustion of the gas generating means after the igniting current is applied. After the igniting current is applied, this housing internal pressure ascends until a seal tape closing the gas discharge port is ruptured, and it descends once after the seal tape is ruptured. The peak of the combustion maximum internal pressure in the present invention means the time when the housing internal pressure ascends by combustion of the gas generating means and reach the maximum after the seal tape closing the gas discharge port is ruptured. Even if the housing internal pressure becomes the maximum at the time when the seal tape is ruptured, the time is not included in the peak.

In the above-described gas generator of the present invention, of course, it is possible to properly select/adopt an advantageous structure or part such as, for example, a cushion member supporting a gas generating means to prevent cracking into pieces due to vibrations, within a range where the effect of the invention is not deteriorated.

The above-described gas generator for an air bag of the present invention can be constituted as an air bag apparatus including an impact sensor detecting the impact to actuate the gas generator, an air bag to introduce a gas generated by the gas generator to inflate, and a module case accommodating the air bag. The gas generator is accommodated in the module case together with the air bag (bag body) to introduce the gas generated to inflate, thereby being provided as a pad module. When the gas generator is provided with an electric ignition type igniter activated by the electric signal, the pad module is combined with an impact sensor detecting the impact and a control unit outputting an activation signal to the gas generator upon the signal inputted from the impact sensor, thus. forming an air bag apparatus.

In the air bag apparatus, the gas generator is actuated upon the impact sensor detecting the impact to discharge a combustion gas from the gas discharge port of the housing. The combustion gas flows into the air bag, and thereby the air bag breaks a module cover to inflate and forms a cushion absorbing the impact between a hard structure in the vehicle and an occupant.

The present invention can provide a gas generator for an air bag having a simple structure, and it can also provide a gas generator which adjusts the internal pressure in the gas generator according to combustion of the gas generating means to maintain a proper combustion generally during the combustion.

### Brief Description of the Drawings

Fig. 1 is a vertical cross sectional view showing a preferred embodiment of a gas generator of the present invention;
Fig. 2 is a perspective view showing a filter/coolant;
Fig. 3 is a tank curve at a tank combustion test conducted with the gas generator shown in Fig. 1; and
Fig. 4 is a structural view of an air bag apparatus of the present invention.

### Explanation of reference numerals

1. Housing
2. Ignition means
3. Gas generating agent
4. Filter/coolant
7. Ignition means accommodating chamber
8. Combustion chamber

### Preferred Embodiments of the Invention

A gas generator for an air bag of the present invention provided with the above-described performances can be realized in the embodiments described below.

### Embodiment 1

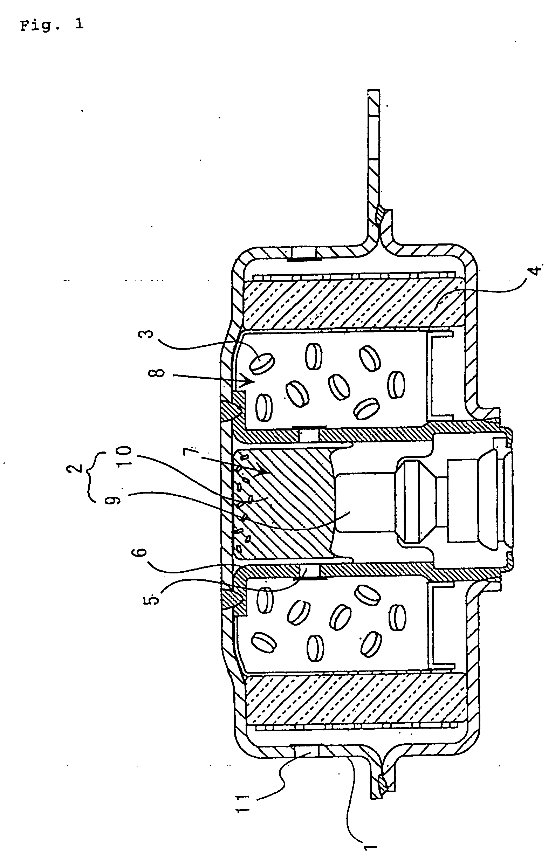

Fig. 1 is a vertical cross sectional view of one embodiment in a gas generator for an air bag of the present invention. A gas generator shown in this figure is formed so as to include and accommodate, in a housing 1 having a gas discharge port, an ignition means 2 and a gas generating agent 3 which generates an activation gas for inflating an air bag by actuation of the ignition means 2. Further, a filter means for removing a solid product generated by combustion of the gas generating agent 3, that is, a filter/coolant 4 for purifying and cooling the activation gas in the present embodiment, is arranged between a combustion chamber storing the gas generating agent 3 and the housing 1 as an orifice member. This filter/coolant 4 functions as the orifice member and its openings function as nozzles which are narrowed according to combustion of the gas generating agent 3.

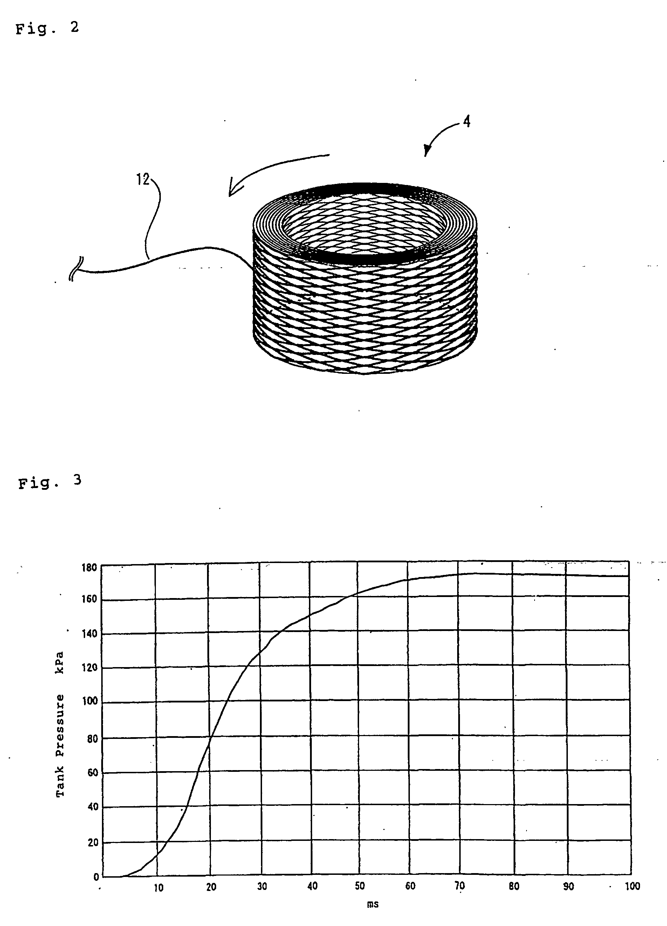

The filter/coolant 4 in the present embodiment is shown in Fig. 2. This filter/coolant 4 is formed in such a manner that one wire 12 made of SUS is wound on a cylindrical member having an outer diameter corresponding to an inner diameter of a filter, and that closed portions and opening portions are obtained by forming portions where the wire crosses and portions where the wire does not cross. Further, the wire is wounded to be laminated and then sintered, thereby forming the filter/coolant 4 provided with an inner space. In the filter/coolant 4 obtained in this manner, since small orifices (openings) are arranged uniformly and orifices are continuously arranged, solid products such as residues easily clog the orifices.

This filter/coolant 4 has a function to collect/adhere a solid by-product such as a solid product generated by combustion of the gas generating agent 3. Therefore, when the filter/coolant 4 purifies the activation gas generated due to combustion of the gas generating agent 3 after actuation of the gas generator, the openings (nozzles) are clogged with the solid product to be narrowed so that the pressure loss increases according to the elapse of time. As a result, the pressure (combustion pressure) in the housing 1 after actuation of the gas generator is adjusted by the filter/coolant 4, so that it is possible to avoid deteriorating combustion performance due to decrease of the surface area of the gas generating agent 3.

In Fig. 1, an inner cylindrical member 6 provided with a plurality of flame-transferring holes 5 in a circumferential direction is arranged in the housing 1, and an ignition means accommodating chamber 7 accommodating the ignition means 2 and a combustion chamber 8 accommodating the gas generating agent 3 are defined inside of the inner cylindrical member 6 and outside thereof, respectively. The ignition means 2 in the present embodiment comprises an electric ignition type igniter 9 which is to be activated by an electric signal and a transfer charge 10 which is to be ignited/burnt by the igniter to eject the flame from flame-transferring holes to ignite/burn the gas generating agents 3. Particularly in the present embodiment, a pellet shaped gas generating agent 3 (having a diameter of 5 mm and a thickness of 2 mm) is used as the gas generating agent accommodated in the combustion chamber 8. The gas generating agent 3 in such a shape is used in the gas generator of the present invention because, even when the surface area of the gas generating agent 3 is reduced by combustion, the internal pressure in the housing 1 can be adjusted by the openings of the filter/coolant 4 to generate a sufficient amount of activation gas. As the gas generating agent 3 in the present embodiment, a gas generating agent 3 comprising nitroguanidine/strontium nitrate/sodium salt of carboxymethylcellulose/acid clay = 34.4/49.5/9.4/6.7 (weight %) is used in an amount of 40g, and it generates a solid product of about 12g by combustion thereof.

The filter/coolant 4 for purifying/cooling the activation gas is arranged oppositely to a peripheral wall of the housing 1 with a distance in the radial outside of the combustion chamber storing the gas generating agent 3. A space defined between an inner wall surface of the housing 1 and an outer periphery of the filter/coolant 4 functions as a flowpath for the activation gas. Since the filter/coolant 4 in the present embodiment has to purify and cool an activation gas, a filter/coolant manufactured by laminating a wire material into multiple layers and sintering them is used. However, as the filter means in the present invention, any means, which collects/adheres the solid by-product generated by combustion of the gas generating agent 3 to increase its pressure loss, can be used properly.

Whether or not the openings of the filter/coolant 4 are narrowed according to combustion of the gas generating agent 3 can be judged on the basis of a change in the pressure loss of the filter/coolant 4. In the present embodiment, such an adjustment has been made that the pressure loss of the filter/coolant 4 before the gas generating agent 3 burns (before generation of the activation gas) is 0.4 kPa under the atmosphere of 20°C at an air flow rate of 350 liters/minute, and the pressure loss after actuation of the gas generator (that is, after the activation gas generated by combustion of the gas generating agent 3 is purified) is increased to about 1,000% of the former pressure loss.

The change in pressure loss of the filter/coolant 4 before and after combustion of the gas generating agent 3 is affected by an amount of a solid by-product generated by combustion of the gas generating agent 3, the size thereof and the like. In the present invention, however, as long as the above-described degree of pressure loss can be achieved in the relationship between the filter/coolant 4 and the generated amount/size of the solid product of the gas generating agent 3 or the like, any combination of both can be used.

The gas discharge port 11 formed in the housing 1 is adjusted such that its total area of the opening portions is 90 mm², and the pressure loss is adjusted to 2.5 to 3.5 kPa under the atmosphere of 20°C at an air flow rate of 350 liters/minute. That is, in the gas generator shown in the present embodiment, since the gas discharge port 11 is larger in pressure loss than the filter/coolant 4 at the initial stage of actuation of the gas generator, the pressure (combustion pressure) in the housing 1 is adjusted by the gas discharge port 11. Thereafter, at a time when the pressure loss of the filter/coolant 4 becomes larger than the pressure loss of the gas discharge port 11, the pressure (combustion pressure) in the housing 1 is adjusted by the filter/coolant 4 (actually, its openings). Thus, in case that the internal pressure in the housing 1 is adjusted by the gas discharge port 11 at the initial stage of actuation of the gas generator, it is required that the pressure loss (ventilation loss) of an orifice member (the filter/coolant 4 in the present embodiment) before actuation of the gas generator is adjusted to be smaller than the pressure loss (ventilation loss) of the gas discharge port 11 provided in the housing 1.

In the gas generator of the present embodiment, when the transfer charge 10 is ignited and burnt by activation of the igniter 9, a flame thereof is ejected from the flame-transferring holes 5 into the combustion chamber 8 to ignite/burn the gas generating agent 3 and to generate an activation gas for inflating the air bag and a solid by-product. The solid by-product is removed while passing through the filter/coolant 4, and only the activation gas is cooled by the filter/coolant 4 to be discharged from the gas discharge port 11. In the filter/coolant 4, the solid by-product generated by combustion of the gas generating agent 3 is arrested so that a passing-through area for the activation gas decreases gradually after the combustion of the gas generating agent 3. Thereby, a sufficient pressure for combustion of the gas generating agent 3 is maintained in the combustion chamber. As a result, the gas generating agent 3 can generate a sufficient amount of an activation gas without deteriorating combustion performance even when its surface area decreases due to combustion.

Fig. 3 shows a tank curve which has been obtained by conducting a tank combustion test using the gas generator shown in Fig. 1.

Accordingly, according to the gas generator, there can be realized a gas generator in which an operation performance is adjusted such that the tank internal pressure in the tank combustion test is 50 kPa or less at 15 milliseconds after an ignition current is applied, 140 to 200 kPa at 40 milliseconds after an ignition current is applied, and the peak of the tank internal pressure appears at 60 to 100 milliseconds after the ignition current is applied, and the tank internal pressure at the time of the peak is 230 kPa or less.

### Embodiment 2

The above-described gas generator for an air bag is accommodated in a module case together with an air bag (bag body) which introduces therein a gas generated by the gas generator to inflate, thereby forming an air bag apparatus.

In this air bag apparatus, the gas generator is actuated, reacting upon the impact sensor detecting the impact, and then discharge a combustion gas from the gas discharge port of the housing. The combustion gas flows into the air bag, and thereby an air bag breaks a module cover to inflate and form a cushion absorbing an impact between a hard structure in the vehicle and an occupant.

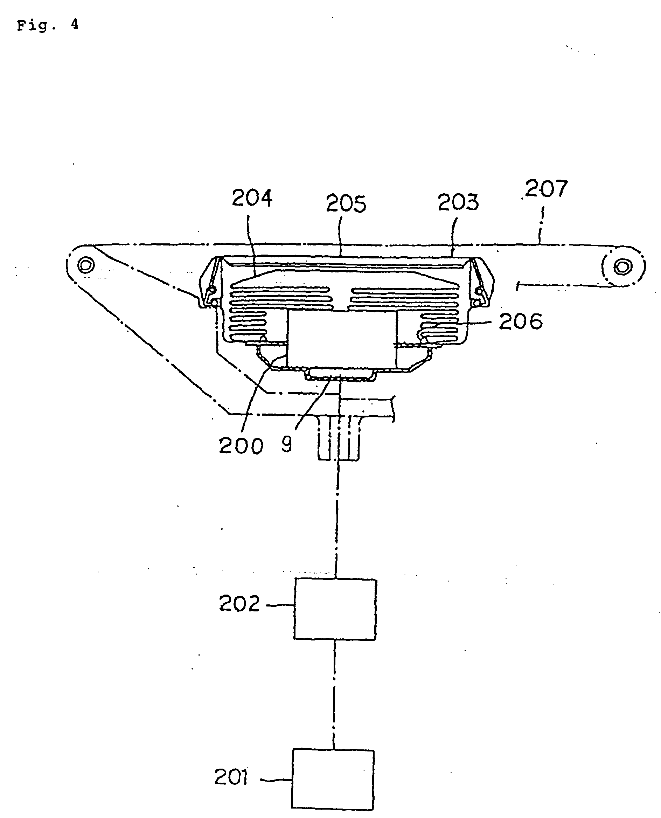

Fig. 4 shows an embodiment of an air bag apparatus according to the present invention, including a gas generator in which the electric ignition type ignition means is used.

The air bag apparatus comprises a gas generator 200, an impact sensor 201, a control unit 202, a module case 203 and an air bag 204. As the gas generator 200, the gas generator described with reference to Fig. 1 is used, and the operation performance thereof is adjusted to apply as a small impact as possible to the occupant at the initial stage of the actuation of the gas generator.

The impact sensor 201 can comprise, for example, a semiconductor type acceleration sensor. The semiconductor type acceleration sensor is structured such that four semiconductor strain gauges are formed on a beam of a silicone base plate to be deflected when the acceleration is applied, and these semiconductor strain gauges are bridge-connected. When the acceleration is applied, the beam deflects and a stain is produced on the surface. Due to the strain, a resistance of the semiconductor strain gauge is changed, and the structure is made such that the resistance change can be detected as a voltage signal in proportion to the acceleration.

The control unit 202 is provided with an ignition decision circuit, and the signal from the semiconductor type acceleration sensor is inputted to the ignition decision circuit. The control unit 202 starts calculation at a time when the impact signal from the sensor 201 exceeds a certain value, and when the calculated result exceeds a certain value, it outputs the activation signal to the igniter 9 of the gas generator 200.

The module case 203 is formed, for example, by a polyurethane, and includes a module cover 205. The air bag 204 and the gas generator 200 are stored in the module case 203 so as to be constituted as a pad module. The pad module is generally mounted to a steering wheel 207 when being mounted to a driver side of an automobile.

The air bag 204 is formed of a nylon (for example, a nylon 66), a polyester or the like, and a bag port 206 thereof surrounds the gas discharge port of the gas generator and is fixed to a flange portion of the gas generator in a folded state.

When the semiconductor type acceleration sensor 201 senses the impact at a time of collision of the automobile, the signal is transmitted to the control unit 202, and the control unit 202 starts calculation at a time when the impact signal from the sensor exceeds a certain value. When the calculated result exceeds a certain value, it outputs the activating signal to the igniter 9 of the gas generator 200. Accordingly, the igniter 4 is activated so as to ignite the gas generating agent, and the gas generating agent burns and generates a gas. The gas is ejected into the air bag 204, whereby the air bag breaks the module cover 205 so as to inflate, forming a cushion absorbing an impact between the steering wheel 207 and the occupant.

## Claims

1. A gas generator for an air bag, comprising, in a housing having a gas discharge port, an ignition means which actuates a gas generator and a gas generating means which generates an activation gas for inflating an air bag by the actuation of the ignition means,
wherein the gas generating means is accommodated in a combustion chamber, an orifice member provided with a plurality of nozzles which are narrowed according to combustion of the gas generating means is provided in a flow path for an activation gas extending from the combustion chamber to the gas discharge port, and a proper combustion pressure is maintained by the orifice member.

2. A gas generator for an air bag, comprising, in a housing having a gas discharge port, an ignition means which actuates a gas generator and a gas generating means which generates an activation gas for inflating an air bag by the actuation of the ignition means,
wherein the gas generating means is accommodated in a combustion chamber, an orifice member provided with a plurality of nozzles which are narrowed according to combustion of the gas generating means is provided in a flow path for an activation gas extending from the combustion chamber to the gas discharge port, and the nozzles are clogged with a solid product generated by the combustion of the gas generating means and narrowed, so that a proper combustion pressure is maintained.

3. A gas generator for an air bag according to claim 1 or 2, wherein, in the orifice member, a pressure loss thereof is smaller than the pressure loss of the gas discharge port before combustion of the gas generating means and is larger than the pressure loss of the gas discharge port after combustion of the gas generating means.

4. A gas generator for an air bag according to any one of claims 1 to 3, wherein a filter means for removing a solid product generated by combustion of the gas generating means is disposed in the housing, and the orifice means is the filter means, and the nozzles are openings of the filter means.

5. A gas generator for an air bag according to any one of claims 1 to 4, wherein the orifice member provided in the flow path for an activation gas compensates for lowering of the combustion performance of the gas generating means due to that the gas generating means burns and the surface area thereof decreases, and the orifice member adjusts the combustion performance of the gas generating means.

6. A gas generator for an air bag according to any one of claims 1 to 5, wherein the operation performance of the gas generator is adjusted such that a tank internal pressure in a tank combustion test is 50 kPa or less at 15 milliseconds after an ignition current is applied, is 140 to 200 kPa at 40 milliseconds after the ignition current is applied, and the peak of the tank internal pressure appears at 60 to 100 milliseconds after the ignition current is applied, and the tank internal pressure at the time of the peak is 230 kPa or less.

7. A gas generator for an air bag, comprising, in a housing having a gas discharge port, an ignition means which actuates a gas generator and a gas generating means which generates an activation gas for inflating an air bag by the actuation of the ignition means,
wherein the operation performance of the gas generator is adjusted such that a tank internal pressure in a tank combustion test is 50 kPa or less at 15 milliseconds after an ignition current is applied, is 140 to 200 kPa at 40 milliseconds after the ignition current is applied, and the peak of the tank internal pressure appears at 60 to 100 milliseconds after the ignition current is applied, and the tank internal pressure at the time of the peak is 230 kPa or less.

8. An air bag apparatus comprising:
a gas generator for an air bag;
an impact sensor which actuates the gas generator upon detecting the impact;
an air bag which introduces a gas generated by the gas generator to inflate; and
a module case which stores the air bag, wherein the gas generator for an air bag is a gas generator of an air bag according to any one of claims 1 to 7.
